# EUROPEAN PATENT APPLICATION

(11) **EP 1 077 411 A1**
(43) Date of publication of application: **21.02.2001**
(21) Application number: 00200777.1
(22) Date of filing: 06.03.2000
(51) Int. Cl.: G06F 11/14

(54) **System and method for restoring computer files over a wide area computer network**

(30) Priority: 16.08.1999 US 374940
(71) Applicant: Fairbanks Systems Group, San Diego, CA 9121-1194 (US)
(72) Inventor: Mickelsen, Stephen Peter, Encinitas, CA 92024 (US)
(74) Representative: Shortt, Peter Bernard

(57) **Abstract**

A user computer (16) backs up its files via the Internet to a data center (12). Should the user computer (16) malfunction or be lost, the user can contact the vendor of the computer, and in response a vendor computer (18) sends a request for data to the data center (12). The data center (12) downloads the data via the Internet onto a bootable disk partition established on the vendor computer (18), and the vendor computer (18) then transfers what is essentially an image of the disk of the user computer (16) onto a replacement computer (22). The replacement computer (22) can be a new computer or the repaired original user computer (16).

## Description

### FIELD OF THE INVENTION

The present invention relates generally to computer file back up systems, and more particularly to automated computer file back up systems.

### BACKGROUND

The above-referenced patent applications disclose methods and systems for backing up computers over the Internet. As disclosed therein, a user's computer files are backed up block by block using the message digest (MD) 5 derived from the data. A changed MD5 from a previous backup indicates a changed or new block, in any case a block to be hacked up. Changed blocks are encoded and sent via the Internet to a data center, where the blocks and/or files of a user's computer are stored in their encoded form.

As set forth further in the above-referenced applications, should a user's computer lose some or all of its data, the data can be retrieved from the data center, and then decoded by the user's computer. The above-referenced inventions accordingly provide an effective and secure mechanism for automatically backing up computer files to a safe, off-site facility with minimal human action required to execute a periodic backup.

As recognized by the present invention, it might happen that a third party computer vendor may wish to provide a service to its customers that involves off-site backups. Such a vendor might not want to maintain a data center complex, but might nonetheless wish to employ the principles set forth in the aforementioned patents and applications in rendering its service. It is an object of the present invention to address this issue.

### SUMMARY OF THE INVENTION

A method for recovering from loss of data in an original user computer includes backing up the data from the original user computer to a data center via the Internet, and then subsequently receiving a user request for a replacement user computer having the data stored thereon when, for instance, the original computer malfunctions or is lost. In response to the user request, at the data center a vendor request for the data is received. In response to the vendor request, the data is transmitted via the Internet from the data center to a vendor facility, where the data is recorded onto a replacement user computer that subsequently is made available to the user. As understood by the present invention, the replacement computer can be a repaired version of the original user computer, or a new computer.

In a preferred embodiment, the vendor request includes an identification of the original user computer, and the vendor request is authenticated prior to transmitting the data via the Internet from the data center to the vendor facility. Also, the method can include fulfilling one and only one vendor request for data for an original user computer, for security purposes.

In a particularly preferred embodiment, the method includes establishing a bootable disk partition at a vendor computer. Then, the data is downloaded from the data center into the bootable disk partition. Next, the data is transferred from the bootable disk partition to the replacement computer. In this way, malfunctioning of the replacement computer clue to downloading operating system files onto it is avoided.

In another aspect, a computer program storage device includes a program of instructions that are readable by a data center computer for backing up data from a user computer over the Internet. The method acts embodied by the instructions include receiving a request from a vendor of the user computer for the data, with the request including an identification of the user computer. The request is sent over the Internet to a vendor computer for subsequent recording of the data onto a replacement user computer.

In still another aspect, a computer program storage device includes a program of instructions that are readable by a vendor computer for transmitting, via a wide area network, a request for data pertaining to the user computer and stored at a remote data center, in response to a request to recover from a user computer malfunction or loss. The instructions also include receiving the data from the data center, and recording the data onto a replacement computer, which is then made available to the user.

The details of the present invention, both as to its structure and operation, can best be understood in reference to the accompanying drawings, in which like reference numerals refer to like parts, and in which:

### BRIEF DESCRIPTION OF THE DRAWINGS

Figure 1 is a schematic diagram of the architecture of the present invention;
Figure 2 is a flow chart of the present logic;
Figure 3 is a flow chart of the process for encrypting data to be backed up; and
Figure 4 is a flow chart of the process for decrypting backed up data received from the data center.

### DETAILED DESCRIPTION OF THE PREFERRED EMBODIMENT

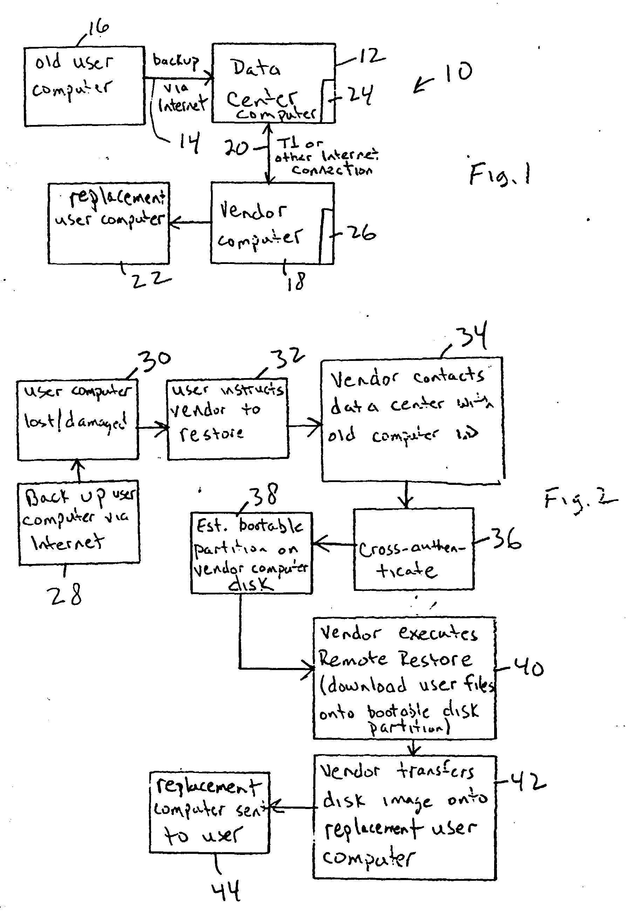

Referring initially to Figure 1, a system is shown, generally designated 10, which includes a server computer, referred to herein as a data center computer 12, which is part of a computer network. In the preferred embodiment, the data center computer 12 is part of the computer network 14 referred to as the Internet, and the data center computer 12 can communicate with other computers on the network 14 via a modem, LAN, WAN, or other network device.

As disclosed in the patents and applications referred to above, user computers 16 communicate with the data center computer 12 to back up files on the user computers 16 to the data center computer 12 via the Internet. Accordingly, the details of the particular backup logic used are omitted herein for clarity of disclosure, except as the logic is modified to undertake the present invention. The user computers 16 can be laptop computers, desktop computers, palmtop computers, network server computers, or any other computers for which a data backup is desired.

Should a user computer 16 malfunction or be lost, the owner can contact the vendor of the computer 16 to request a replacement, complete with an image of the disk of the original user computer 16. In response, a vendor computer 18 communicates a request for data, including the identification of the user computer 16, to the data center 12 via a T1 line 20, other Internet connection, or other communication path of a wide area network. As disclosed in greater detail below, after the vendor computer 18 has downloaded the data from the data center computer 12, it records the data onto a replacement computer 22. The replacement computer 22, which can be a new computer or a repaired version of the original user computer 16, is then made available to the user by, e.g., shipping the replacement computer 22 to the user.

To undertake the logic of the present invention, the data center computer 12 accesses a data center module 24, and the vendor computer 18 accesses a vendor module 26. Figure 2 illustrates the structure of the modules 24, 26 of the present invention as embodied in computer program software. Those skilled in the art will appreciate that the Figures illustrate the structures of logic elements, such as computer program code elements or electronic logic circuits, that function according to this invention. Manifestly, the invention is practiced in its essential embodiment by a machine component that renders the logic elements in a form that instructs a digital processing apparatus (that is, a computer) to perform a sequence of function steps corresponding to those shown in the Figures.

These instructions may reside on a program storage device including a data storage medium to establish a computer program product, such as a programmed computer diskette. Alternatively, such media can also be found in semiconductor devices, on magnetic tape, on optical disks, on a DASD array, on a conventional hard disk drive, on electronic read-only memory or on electronic random access memory, or other appropriate data storage device. In an illustrative embodiment of the invention, the logic means are computer-executable instructions that are written in C⁺⁺ language code.

Referring now to Figure 2, the overall logic of the present invention can be seen. Commencing at block 28, data from the user computer 16 such as file blocks are backed up to the data center computer 12 using the inventions disclosed in the above-referenced patents and applications. At block 30, the user computer 16 can become lost or can malfunction due to, e.g., damage, in which case the user can instruct, at block 32, the vendor to recover from the loss or malfunction.

In response to the user' request for recovery, at block 36 the vendor contacts the data center computer using, e.g., the vendor computer 18, to request a download of the user computer 16 file blocks. As part of the request, the vendor sends the identification of the user computer 16 to the data center computer 12 via the T1 line 20.

Moving to block 36, the data center computer 12 authenticates the vendor request. Also, the vendor computer 18 can authenticate the data center computer 12. This authentication can be undertaken using public key/private key principles. As part of the authentication, the data center computer 12 can, if desired, ascertain whether a prior request has been made by the vendor for data pertaining to the computer associated with the identification received at block 34. If so, subsequent requests can be refused, because only a single valid vendor request for any given computer is anticipated. Additional requests would be considered irregular and refused until the validity of the additional requests could be verified.

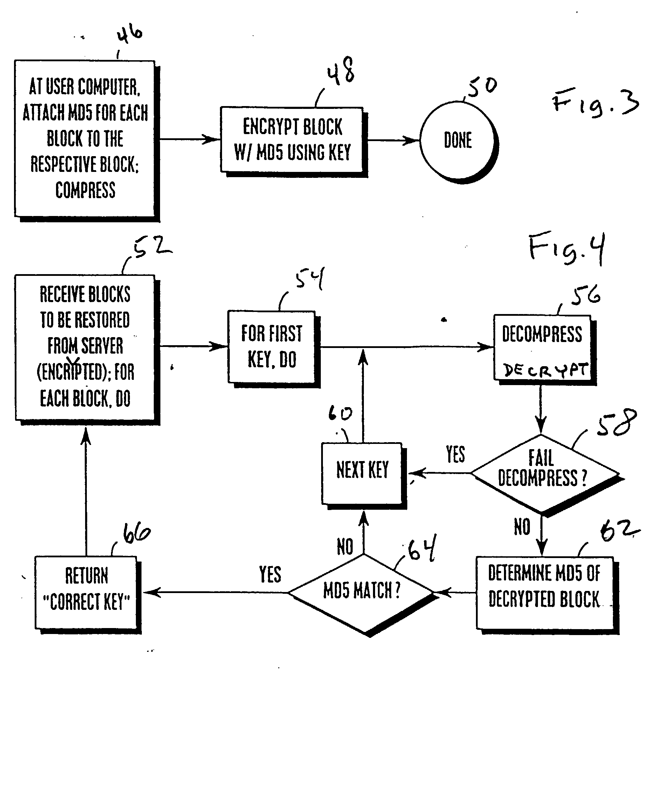

After authentication, the logic moves to block 38 to establish a bootable partition on a disk or other storage volume associated with the vendor computer 18. The vendor computer 18 then executes the remote restore logic shown in Figures 3 and 4 at block 40 to download the data via the Internet from the data center computer 12 to the bootable partition. Proceeding to block 42, the data, which is essentially an image of the disk of the user computer 16 before it malfunctioned or was lost, is recorded or otherwise transferred to the replacement computer 22, typically located at the vendor's facility and operating off of its "A" (removable diskette) drive during file transfer. By first downloading the data onto a bootable partition of the vendor computer 18 and then recording the data onto the replacement computer 22 as the replacement computer 22 operates off of its "A" drive, unintentional "crashing" of the replacement computer, which could otherwise be caused by downloading certain "C" (main) drive operating system files, is avoided. The replacement computer 22 is then provided or sent or otherwise made available to the user at block 44.

Figures 3 and 4 show details of the remote restore logic mentioned above. Commencing at block 46, at a user computer 16, the digital signature MD5 code for each block for which backup has been selected by the steps disclosed in the above-referenced patent and applications is determined and attached to its respective data block, and then the digital signature MD5 code with data block is compressed using compression principles known in the art. Moving to block 48, the data block, but not the MD5 code, is encrypted with a user-selected key on a user key list. From block 48, the process ends at state 50, it being understood that further transmission steps can be undertaken.

Subsequently, when the remote restore logic is to be invoked as discussed above, the vendor computer 18 invokes the steps shown in Figure 4. Commencing at block 52, the vendor computer receives the blocks to be restored from the data center and then undertakes the following steps for each block. At block 54, the computer selects the first encryption key in the list from the user computer 16, and then at block 56 the vendor computer 18 decrypts and decompresses the block. Moving to decision diamond 58, the vendor computer 18 determines whether decompression failed as indicated by, e.g., data overflow. If decompression failed, the process moves to block 60 to select the next key in the list, and then loops back to block 56 to again attempt decompression.

If, on the other hand, decompression is determined at decision diamond 58 to have been executed satisfactorily, the process moves to block 62 to further validate the key under test by stripping the digital signature MD5 code from the packet and then calculating anew the digital signature MD5 code of the data that is associated with the decrypted block. In undertaking the process at block 62, the present invention understands that the digital signature MD5 code is a 128 bit-long string that is appended to the data with which it is associated in a known location, and that consequently the digital signature MD5 code easily can be stripped.

At decision diamond 64 the calculated digital signature MD5 code of the decrypted data is compared to the decrypted digital signature MD5 code that had been stripped from the data at block 62. If the two digital signature MD5 codes match each other at decision diamond 64, the key under test has been validated and the process returns "correct key" at block 66. Then the process retrieves the next data portion at block 52. Otherwise, the process loops back to block 60 to retrieve the next key in the user computer's key list. Once the blocks of a file have been decompressed and decrypted, they are stitched back together in the proper sequence to render a restored version of the file.

In the preferred embodiment, the MD5 signatures for entire files are also determined and recorded at backup time, as well as the per-block signatures. During the restoration process, after all blocks of a file have been decompressed, decrypted, and stitched back together, the MD5 of the newly recovered file is compared to that of the original file to ensure that the file that has been restored is indeed the file that was backed up.

While the particular SYSTEM AND METHOD FOR RESTORING COMPUTER FILES OVER A WIDE AREA COMPUTER NETWORK as herein shown and described in detail is fully capable of attaining the above-described objects of the invention, it is to be understood that it is the presently preferred embodiment of the present invention and is thus representative of the subject matter which is broadly contemplated by the present invention, that the scope of the present invention fully encompasses other embodiments which may become obvious to those skilled in the art, and that the scope of the present invention is accordingly to be limited by nothing other than the appended claims, in which reference to an element in the singular is not intended to mean "one and only one" unless explicitly so stated, but rather "one or more".

## Claims

1. A method for recovering from loss of data in an original user computer (16), the improvement characterised by:
backing up the data from the original user computer (16) to a data center (12) via the Internet; then subsequently
receiving a user request for a replacement user computer (22) having the data stored thereon;
receiving, at the data center (12), a vendor request for the data in response to the user request;
in response to the vendor request, transmitting the data via the Internet from the data center (12) to a vendor facility;
at the vendor facility, recording the data onto a replacement user computer (22); and
making the replacement computer (22) available to the user.

2. The method of Claim 1, wherein the replacement computer (22) is the original user computer (16).

3. The method of Claim 1, wherein the vendor request includes an identification of the original user computer (16).

4. The method of Claim 3, wherein the vendor request is authenticated prior to transmitting the data via the Internet from the data center (12) to the vendor facility.

5. The method of Claim 1, further comprising fulfilling one and only one vendor request for data for an original user computer (16).

6. The method of Claim 1, further comprising:
establishing a bootable disk partition at a vendor computer (18);
downloading the data from the data center (12) into the bootable disk partition; and
transferring the data from the bootable disk partition to the replacement computer (22).

7. A computer program storage device including a program of instructions readable by a data center computer (12) to undertake method acts for preserving data backed up over the Internet from a user computer (16), the improvement characterised by:
subsequent to backing up the user computer (16), receiving a request from a vendor of the user computer (16) for the data, the request including an identification of the user computer (16); and
sending the request over the Internet to a vendor computer (18) for subsequent recording of the data onto a replacement user computer (22).

8. The computer program storage device of Claim 7, wherein the method acts embodied by the instructions include authenticating the request from the vendor.

9. The computer program storage device of Claim 7, wherein the method acts embodied by the instructions include fulfilling one and only one vendor request for data for any given user computer (16).

10. A computer program storage device including a program of instructions readable by a vendor computer (18) to undertake method acts for recovering lost data in response to a request to recover from a user computer (16) malfunction or loss, the improvement characterised by:
transmitting, via a wide area network, a request for data pertaining to the user computer (16) and stored at a data center (12) remote from the user computer (16);
receiving the data from the data center (12); and
recording the data onto a replacement computer, such that a mirror image of the user computer can made available to the user.

11. The computer program storage device of Claim 10, wherein the method acts embodied by the instructions include:
sending an identification of the user computer (16) to the data center (12).

12. The computer program storage device of Claim 10, wherein the method acts embodied by the instructions include:
establishing a bootable partition on a storage volume;
receiving the data from the data center (12) onto the partition; and
transferring the data from the partition to the replacement computer.

13. A computer program which when running on a computer network, is capable of performing the method as claimed in any one of claims 1 to 6.
